# FASCICULE DE BREVET EUROPEEN

(11) **EP 0 651 211 B1**
(45) Date de publication et mention de la délivrance du brevet: **29.01.1997**
(21) Numéro de dépôt: 94810614.1
(22) Date de dépôt: 25.10.1994
(51) Int. Cl.: F24J 2/34, F24J 2/00

(54) **Paroi chauffante solaire**
Absorbtionswand für Sonnenwärme
Wall for solar radiation absorbtion

(30) Priorité: 29.10.1993 CH 3274/93
(43) Date de publication de la demande: 03.05.1995
(73) Titulaire: Minder, Jean, CH-2608 Courtelary (CH); Minder, Pierre-Maurice, CH-2608 Courtelary (CH)
(72) Inventeur: Minder, Jean, CH-2608 Courtelary (CH); Minder, Pierre-Maurice, CH-2608 Courtelary (CH)
(74) Mandataire: Ganguillet, Cyril

(56) Documents cités:
- EP-A- 0 003 442
- EP-A- 0 109 043
- EP-A- 0 126 248
- DE-A- 3 910 356
- FR-A- 2 540 235
- US-A- 4 355 682

## Description

La présente invention concerne une paroi chauffante solaire.

Les parois chauffantes solaires qui ont été proposées jusqu'ici sont soit très lourdes à réaliser lorsqu'elles sont massives, comme celles décrites dans le brevet européen no 0492005, soit de conception complexe lorsqu'elles utilisent des courants de convexion internes, comme celles décrites dans le brevet suisse no 651128.

Il a également été proposé de réaliser une paroi chauffante solaire comportant des capsules accumulatrices de chaleur latente (voir Schlussbericht des vom Nationalen Energie-Forschungs-Fonds "NEFF-Projekt Nr. 371" und dem Kanton Bern finanzierten Projektes: "Paroi chauffante solaire", Untersuchung eines fassadenintegrierten Luftkollektor-Latentwärmespeicher-Systems zur Nutzung der Sonnenenergie für die Raumheizung, September 1992). Toutefois, la paroi qui est proposée dans ce document est du type à circulation d'air, comme celles mentionnées plus haut. Elle est de ce fait relativement compliquée à réaliser et nécessite en particulier l'incorporation d'un ventilateur.

Or, l'utilisation de capsules accumulatrices de chaleur latente, qui, dans le bâtiment, ont été utilisées jusqu'ici essentiellement à l'intérieur de chapes ou autres masses en béton, paraît intéressante pour les parois chauffantes solaires. Elles contiennent des substances qui passent de l'état solide à l'état liquide lorsqu'elles sont placées dans un environnement dont la température est plus élevée que la température de fusion des dites substances, ce qui permet à la capsule d'absorber une grande quantité de chaleur, qui se libère ensuite lors du passage des dites substances de l'état liquide à l'état solide lorsque la température de l'environnement de la capsule devient inférieure à leur température de fusion. Des substances de ce type sont par exemple décrites dans le brevet suisse no 636119.

Le but de la présente invention est de proposer une paroi chauffante solaire comportant notamment des capsules accumulatrices de chaleur latente, simple à réaliser et permettant de remédier aux inconvénients des parois chauffantes solaires proposées jusqu'ici.

A cet effet, l'invention concerne une paroi chauffante solaire telle que définie à la revendication 1. Des formes particulières de réalisation de la paroi selon l'invention sont définies dans les revendications subordonnées à la revendication 1.

La description qui suit, donnée à titre d'exemple se réfère au dessin sur lequel:
la figure 1 est une vue schématique en perspective éclatée d'un exemple de paroi chauffante solaire selon l'invention,
la figure 2 est une coupe transversale verticale de la paroi de la figure 1,
la figure 3 est une coupe horizontale selon la ligne B-B de la figure 2,
la figure 4 est une coupe horizontale selon la ligne A-A de la figure 2,
la figure 5 est une coupe transversale verticale d'une variante d'exécution de la paroi de la figure 1,
la figure 6 est une coupe horizontale selon la ligne D-D de la figure 5,
la figure 7 est une coupe horizontale selon la ligne C-C de la figure 5, et
la figure 8 illustre de façon schématique et à titre d'exemple, une bande de capsules accumulatrices de chaleur utilisée dans la paroi selon l'invention.

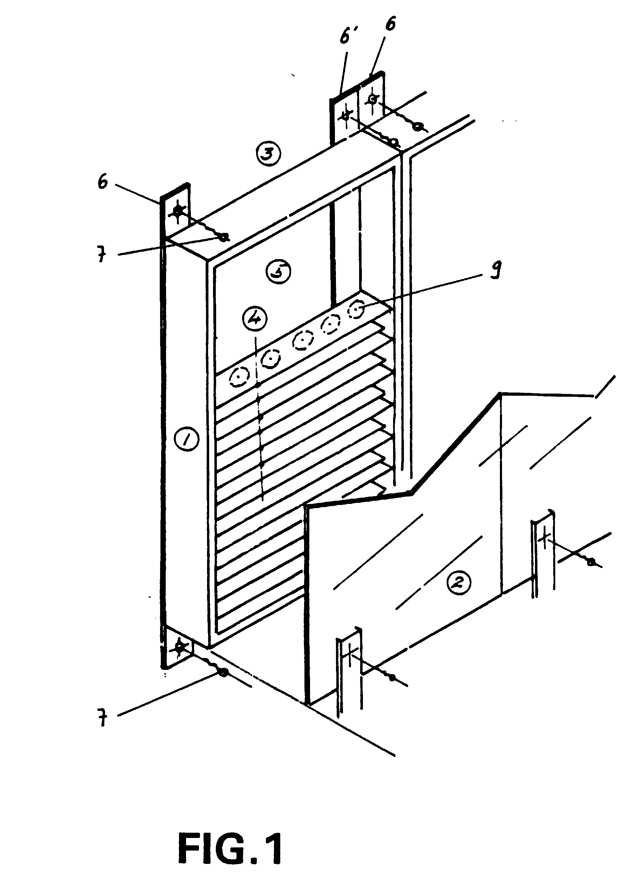

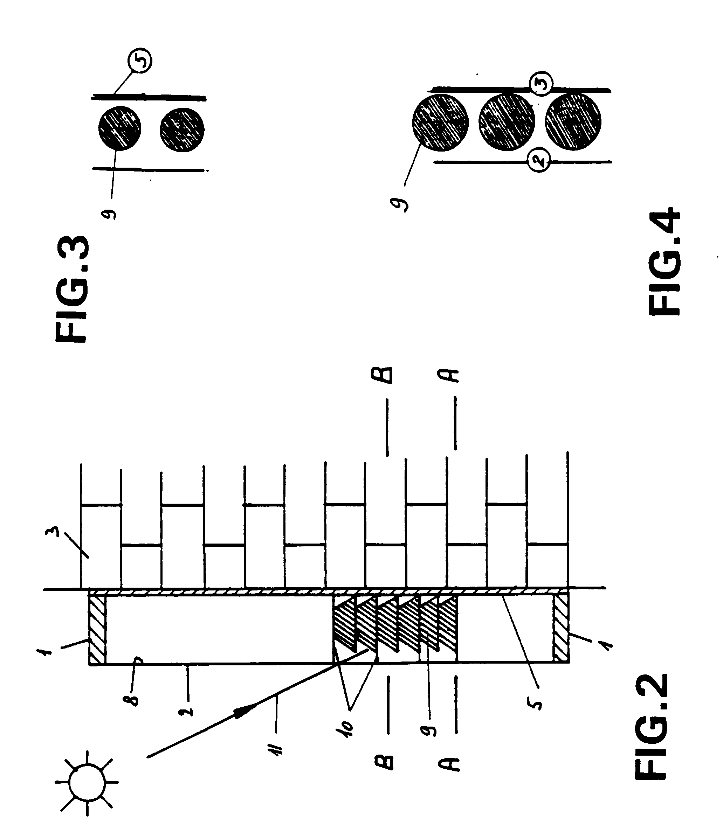

L'élément de paroi représenté à la figure 1 comporte un cadre 1 de forme rectangulaire limité d'un côté par une vitre 2 et de l'autre côté par le mur extérieur 3 d'un local à chauffer. Le mur 3 peut être tapissé d'une couche de laine d'acier 5 ou de toute autre matière compressible équivalente et bonne conductrice de chaleur que l'on trouve couramment sur le marché. La laine d'acier peut comporter un revêtement permettant une bonne absorption du rayonnement solaire, par exemple une couche de peinture noire, notamment dans le cas du mode d'exécution de la paroi représentée aux figures 2 à 4.

Le cadre 1 est monté sur des montants verticaux 6, 6' qui peuvent être fixés contre le mur 3, selon le cas à travers la laine d'acier, au moyen d'éléments de fixation 7, par exemple des vis avec des tampons.

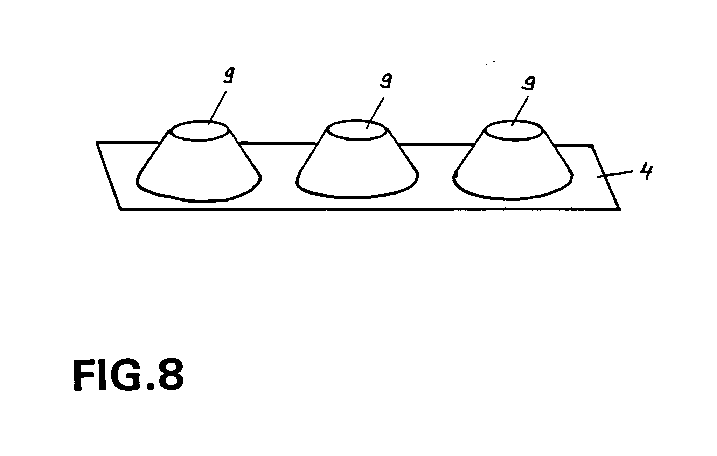

Des bandes 4 bonnes conductrices de chaleur, combinées avec des capsules accumulatrices de chaleur 9, par exemple du type de celles représentées à la figure 8, sont empilées les unes sur les autres à l'intérieur du cadre 1 de façon que les bords des bandes soient mis en contact avec la laine d'acier qu'elles compriment contre le mur. Afin d'éviter la constitution de ponts de froid, les bandes 4 sont maintenues à distance de la vitre. A cet effet, des listes verticales 8 peuvent être intercalées à proximité des bords du cadre entre la vitre et les bords des bandes. La face inférieure des bandes 4 peut être recouverte d'une feuille d'aluminium.

Selon un mode d'exécution représenté sur les figures 2 à 4, les bandes 4 sont simplement empilées les unes sur les autres, tournées de façon que les capsules accumulatrices de chaleur 9 soient disposées la tête dirigée vers le haut.

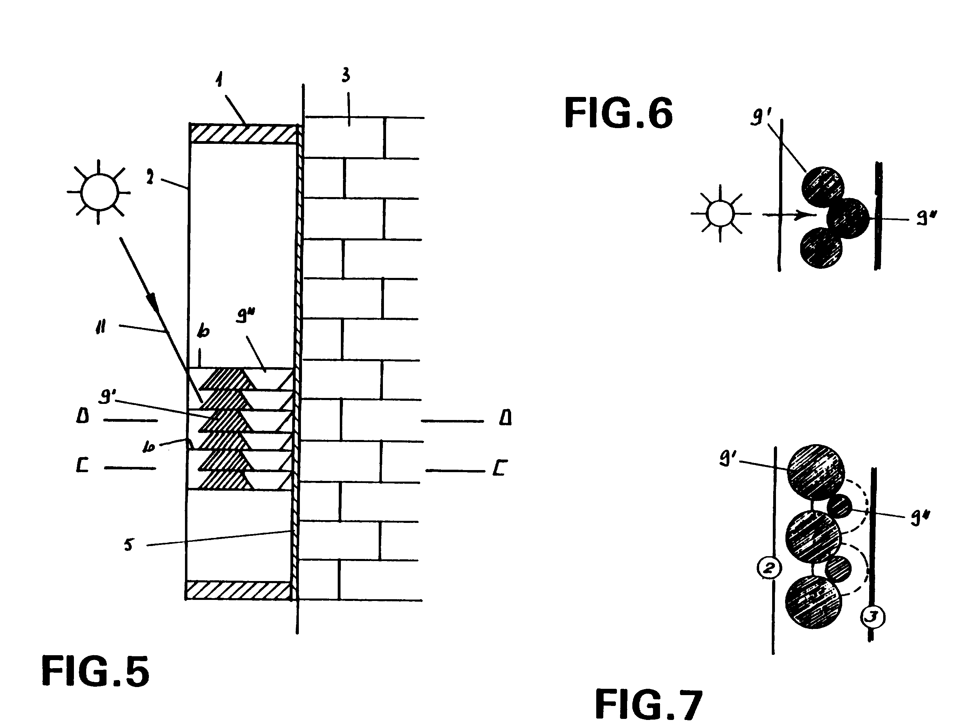

Selon un second mode d'exécution représenté sur les figures 5 à 7, les bandes sont disposées par couples, l'une des bandes d'un couple étant tournée de façon que ses capsules accumulatrices de chaleur 9' soient disposées la tête dirigée vers le haut, l'autre bande du couple étant tournée de façon que ses capsules accumulatrices de chaleur 9'' soient disposées avec la tête dirigée vers le bas, les deux bandes du couple étant décalées l'une par rapport à l'autre de façon que leurs capsules respectives 9' et 9'' s'emboîtent les unes contre les autres.

D'autres modes d'exécution peuvent bien entendu être réalisés en disposant par exemple les bandes de capsules par groupe de trois ou plus selon le principe qui vient d'être décrit. Il est également possible de réaliser une paroi comportant plusieurs couches de bandes de capsules disposées les unes derrière les autres derrière la vitre, les bandes et/ou les capsules de différentes bandes pouvant être imbriquées les unes dans les autres.

Sur les figures 1, 2 et 5, afin de ne pas surcharger les figures, une partie seulement des bandes de capsules 4 ont été représentées. Bien entendu, de telles bandes de capsules 4 sont empilées sur toute la hauteur du cadre.

Les capsules accumulatrices de chaleur 9, 9', qui peuvent par exemple contenir des substances à base de cristaux de chlorure de calcium exhydraté fondant à 30°C, sont de préférence peintes en noir ou de tout autre couleur foncée au moins du côté de la vitre, ce qui permet une bonne absorption du rayonnement solaire. Bien entendu, les capsules peuvent également être munie de tout autre revêtement adéquat permettant une bonne absorption du rayonnement solaire. La chaleur qui en résulte est alors stockée dans les capsules qui passent de l'état solide à l'état liquide. Cette chaleur est ensuite restituée, comme expliqué plus haut, et conduite par l'intermédiaire de la bande 4 jusqu'à la laine d'acier 5, laquelle répartit la chaleur sur le mur.

L'agencement des bords des bandes permet d'agir également comme pare-soleil. En effet, comme on le voit sur les figures 2 et 5, les bords extérieurs des bandes sont choisis alternativement de largeurs différentes, de façon que le bord de bande 10 le plus large constitue un pare-soleil qui laisse entrer le rayonnement solaire en hiver lorsque le soleil est bas, mais qui intercepte le rayonnement solaire 11 d'été.

La fonction de pare-soleil réalisée par l'agencement des bords des bandes supportant les capsules peut être remplacée par des pare-soleil disposés à l'extérieur de la paroi chauffante, devant la vitre 2, comme par exemple un store à lamelles, une tôle à lamelles, une vigne vierge dont les feuilles servent d'écran en été, alors que l'absence de feuilles en hiver n'empêche pas le passage des rayons du soleil, etc.

Les bandes de capsules ainsi que la présence de la laine d'acier permettent de réaliser un cloisonnement de l'espace en compartiments, ce qui empêche tout mouvement de convexion à l'intérieur du cadre. L'air qui se trouve ainsi emprisonné constitue un excellent isolant. D'autre part, du fait que les bandes ne touchent pas la vitre, comme on l'a indiqué, il n'y a pas de pont de froid.

Selon une variante d'exécution, la couche de laine d'acier peut être remplacée par du mortier de ciment, éventuellement mélangé avec de la limaille de fer, ou par tout autre matériau équivalent bon conducteur de chaleur, que l'on coule dans l'espace entre les capsules et le mur, après la mise en place des capsules. Cette variante sera de préférence réalisée avec un agencement des capsules tel que représenté sur les figures 5 à 7 où la disposition des capsules par couples de bandes constitue un écran empêchant le mortier de pénétrer dans l'espace capsule-vitre. Dans le cas où cette variante est réalisée avec un agencement de capsules comme représenté à la figure 2, il est nécessaire de prévoir pour chaque bande un cloisonnement entre les capsules.

La paroi solaire selon l'invention permet ainsi de réaliser une combinaison permanente de différentes fonctions inédite à ce jour: absorption du rayonnement solaire, transport de la chaleur, stockage de la chaleur, pare-soleil et isolation.

## Revendications

1. Paroi chauffante solaire comportant des capsules accumulatrices de chaleur latente (9; 9', 9''), caractérisée en ce que lesdites capsules sont agencées de façon à constituer des bandes (4) bonnes conductrices de chaleur, en ce que ces bandes sont empilées les unes sur les autres et en ce qu'elles sont séparées de l'air ambiant par une vitre (2).

2. Paroi selon la revendication 1, caractérisée en ce qu'elle comporte un cadre (1) agencé pour être fixé contre un mur (3), la vitre (2) étant montée sur le côté extérieur du cadre, les bandes (4) de capsules (9; 9', 9'') étant empilées à l'intérieur du cadre.

3. Paroi selon la revendication 2, caractérisée en ce qu'une couche de laine d'acier (5) est disposée entre le mur et le cadre (1), de façon que la laine d'acier se trouve comprimée contre le mur par les bords intérieurs des bandes (4).

4. Paroi selon la revendication précédente, caractérisée en ce que la laine d'acier est munie d'un revêtement de couleur foncée.

5. Paroi selon l'une des revendications précédentes, caractérisée en ce que l'ensemble est agencé de façon qu'un interstice subsiste entre les bords extérieurs des bandes (4) et la vitre (2), de façon à empêcher la constitution de ponts de froid.

6. Paroi selon l'une des revendication précédentes, caractérisée en ce que les bandes (4) sont disposées par couples, l'une des bandes d'un couple étant tournée de façon que ses capsules accumulatrices de chaleur (9') soient disposées la tête dirigée vers le haut, l'autre bande du couple étant tournée de façon que ses capsules accumulatrices de chaleur (9'') soient disposées avec la tête dirigée vers le bas, les deux bandes du couple étant décalées l'une par rapport à l'autre de façon que leurs capsules respectives (9') et (9'') s'emboîtent les unes contre les autres.

7. Paroi selon l'une des revendications 2 à 5, caractérisée qu'elle comporte plusieurs couches de bandes de capsules disposées les unes derrière les autres derrière la vitre.

8. Paroi selon l'une des revendications précédentes, caractérisée en ce qu'au moins les parties des capsules (9; 9', 9'') situées du côté de la vitre comportent un revêtement de couleur foncée.

9. Paroi selon l'une des revendications précédentes, caractérisée en ce que les bords extérieurs (10) des bandes sont choisis alternativement de largeurs différentes, de façon que le bord (10) le plus large constitue un pare-soleil qui intercepte le rayonnement solaire (11) d'été, mais laisse passer le rayonnement solaire d'hiver.

10. Paroi selon l'une des revendications précédentes, caractérisée en ce que la face inférieure des bandes (4) est recouverte d'une couche d'aluminium.

## Patentansprüche

1. Absorptionswand für Sonnenwärme mit Latentwärme-Akkumulatorkapseln (9; 9', 9"), dadurch gekennzeichnet, daß die Kapseln so angeordnet sind, daß gut wärmeleitende Streifen (4) gebildet werden, daß diese Streifen übereinanderliegend angeordnet sind und daß sie von der umgebenden Luft durch eine Scheibe (2) getrennt sind.

2. Wand nach Anspruch 1, dadurch gekennzeichnet, daß sie einen Rahmen (1) umfaßt, der zur Befestigung an einer Mauer (3) ausgebildet ist, wobei die Scheibe (2) an der außenliegenden Seite des Rahmens angebracht ist und die Streifen (4) mit den Kapseln (9; 9', 9") im Innern des Rahmens übereinanderliegend angeordnet sind.

3. Wand nach Anspruch 2, dadurch gekennzeichnet, daß eine Schicht aus Stahlwolle (5) dergestalt zwischen der Mauer und dem Rahmen (1) angeordnet ist, daß die Stahlwolle durch die innenliegenden Ränder der Streifen (4) gegen die Mauer gepreßt wird.

4. Wand nach dem vorangehenden Anspruch, dadurch gekennzeichnet, daß die Stahlwolle mit einem dunkelfarbigen Überzug versehen ist.

5. Wand nach einem der vorangehenden Ansprüche, dadurch gekennzeichnet, daß das Ganze derart angeordnet ist, daß ein Zwischenraum zwischen den äußeren Rändern der Streifen (4) und der Scheibe (2) vorhanden ist, um die Bildung von Kältebrücken zu verhindern.

6. Wand nach einem der vorangehenden Ansprüche, dadurch gekennzeichnet, daß die Streifen (4) paarweise angeordnet sind, wobei einer der Streifen eines Paares dergestalt gedreht ist, daß seine Wärme-Akkumulatorkapseln (9') mit dem Kopf nach oben angeordnet sind, der andere Streifen des Paares dergestalt gedreht ist, daß seine Wärme-Akkumulatorkap-seln (9") mit dem Kopf nach unten angeordnet sind, und die beiden Streifen des Paares dergestalt gegeneinander versetzt sind, daß sich ihre Kapseln (9') bzw. (9") ineinander verschachteln.

7. Wand nach einem der Ansprüche 2 bis 5, dadurch gekennzeichnet, daß sie mehrere Schichten von Streifen mit Kapseln umfaßt, die hintereinander hinter der Scheibe angeordnet sind.

8. Wand nach einem der vorangehenden Ansprüche, dadurch gekennzeichnet, daß zumindest die sich auf der der Scheibe zugewandten Seite befindenden Teile der Kapseln (9; 9', 9") einen dunkelfarbigen Überzug aufweisen.

9. Wand nach einem der vorangehenden Ansprüche, dadurch gekennzeichnet, daß die äußeren Ränder (10) der Streifen abwechselnd unterschiedlich breit sind dergestalt, daß der breitere Rand (10) eine Sonnenblende bildet, die die sommerliche Sonnenstrahlung (11) abfängt, die winterliche Sonnenstrahlung jedoch passieren läßt.

10. Wand nach einem der vorangehenden Ansprüche, dadurch gekennzeichnet, daß die Unterseite der Streifen (4) mit einer Aluminiumschicht überzogen ist.

## Claims

1. A solar heating wall comprising latent heat accumulator capsules (9; 9', 9"), characterised in that the said capsules are arranged so as to constitute good heat conducting strips (4), in that these strips are stacked on one another and in that they are separated from the ambient air by a pane of glass (2).

2. A wall according to claim 1, characterised in that it comprises a frame (1) arranged to be fixed against a building wall (3), the pane of glass (2) being mounted on the outer side of the frame, the strips (4) of capsules (9; 9', 9") being stacked inside the frame.

3. A wall according to claim 2, characterised in that a layer of steel wool (5) is disposed between the building wall and the frame (1) so that the steel wool is compressed against the building wall by the inner edges of the strips (4).

4. A wall according to the preceding claim, characterised in that the steel wool is provided with a coating of dark colour.

5. A wall according to one of the preceding claims, characterised in that the whole assembly is arranged so that a space exists between the outer edges of the strips (4) and the page of glass (2) so as to prevent the forming of cold bridges.

6. A wall according to one of the preceding claims, characterised in that the strips (4) are disposed in couples, one of the strips of a couple being turned so that its heat accumulator capsules (9') are disposed with the heads directed upwards, the other strip of the couple being turned so that its heat accumulator capsules (9") are disposed with the heads directed downwards, the two strips of the couple being displaced with respect to one another so that their respective capsules (9') and (9") fit against one another.

7. A wall according to one of the claims 2 to 5, characterised in that it comprises several layers of strips of capsules disposed one behind the other behind the pane of glass.

8. A wall according to one of the preceding claims, characterised in that at least the parts of the capsules (9; 9', 9") situated on the side of the pane of glass comprise a coating of dark colour.

9. A wall according to one of the preceding claims, characterised in that the outer edges (10) of the strips are selected alternatively of different widths so that the widest edge (10) constitutes a sun-screen which intercepts the summer solar radiation (11) but allows the winter solar radiation to pass.

10. A wall according to one of the preceding claims, characterised in that the lower face of the strips (4) is covered by a coating of aluminium.
